# DEMANDE DE BREVET EUROPEEN

(11) **EP 0 782 950 A1**
(43) Date de publication de la demande: **09.07.1997**
(21) Numéro de dépôt: 96402714.8
(22) Date de dépôt: 12.12.1996
(51) Int. Cl.: B62D 1/10

(54) **Volant de direction et colonne adaptée au montage d'un tel volant**

(30) Priorité: 05.01.1996 FR 9600079; 11.01.1996 FR 9600256
(71) Demandeur: GERSTEEN exerçant ses activités sous la dénomination ISODELTA, F-86190 Vouille (FR)
(72) Inventeur: Geron, Jean, 86000 Poitiers (FR)
(74) Mandataire: Rinuy, Santarelli

(57) **Abrégé**

Une roue (210) est prévue pour retenir en place sur le moyeu (2) du volant (201), un organe de vissage (212), et pour entraîner cet organe en rotation vis-à-vis du moyeu, la roue (210) étant montée à rotation sur le moyeu coaxialement à celui-ci, et étant munie en périphérie de moyens d'engrènement avec un organe rotatif d'entraînement (15), de sorte que l'on peut monter le volant sur le bout (206) de la colonne de direction sans avoir d'accès direct à l'organe de vissage (212).

La colonne présente une portion lisse (227) au bout de sa tige filetée (209) pour permettre un premier positionnement du volant, par insertion de cette portion lisse dans le taraudage de l'organe de vissage, qui facilite l'opération de montage du volant.

## Description

L'invention a trait d'une manière générale aux directions de véhicules, et plus particulièrement aux dispositions permettant le montage et le démontage du volant sur le bout de la colonne.

On sait que les volants de direction comportent de façon classique un moyeu présentant:
- un alésage garni de rainures ou cannelures orientées suivant une direction axiale, adapté à s'engager par coulissement, suivant cette direction, sur le bout d'une colonne de direction, lui-même garni de rainures ou de cannelures correspondantes ;
- une surface de butée adaptée à venir porter sur une surface d'arrêt correspondante de la colonne pour arrêter le mouvement d'enfoncement du moyeu vis-à-vis de la colonne suivant la direction axiale ; et
- une surface d'appui, opposée à la surface de butée, adaptée à être mise en prise par un écrou ou par la tête d'une vis prévu(e) pour être engagé(e) sur une tige filetée ou un taraudage que comporte la colonne, la rotation de la vis ou de l'écrou dans le sens du vissage entraînant celle-ci ou celui-ci vis-à-vis de la colonne suivant la direction axiale dans le sens de l'enfoncement, le serrage de la vis ou de l'écrou enserrant le moyeu entre la surface d'arrêt de la colonne, sur laquelle porte la surface de butée du moyeu, et l'écrou ou la tête de la vis, qui porte sur la surface d'appui du moyeu.

La colonne et le volant de direction ayant respectivement un tel bout et un tel moyeu donnent toute satisfaction en ce qui concerne les qualités, notamment en matière de sécurité, de la fixation procurée. Cependant, le fait qu'il soit nécessaire d'avoir accès à la zone du volant que regarde la surface d'appui du moyeu pour pouvoir engager l'écrou ou la vis avec le moyen de vissage correspondant de la colonne, puis pour serrer cet écrou ou cette vis, pose un certain nombre de difficultés lors de l'opération de montage pour les volants dans lesquels la zone en question doit être occupée par un module de sécurité en cas de chocs, et notamment un module air-bag, ce module ne pouvant être mis en place qu'après avoir fixé le moyeu à la colonne.

L'invention vise à trouver une solution permettant d'éviter ce genre de difficultés.

Elle propose à cet effet un volant caractérisé en ce qu'il comporte une roue pour retenir en place l'organe de vissage que constitue l'écrou ou la vis, et pour entraîner cet organe en rotation vis-à-vis du moyeu, ladite roue étant montée à rotation sur le moyeu coaxialement à celui-ci, et étant munie en périphérie de moyens d'engrènement avec un organe rotatif d'entraînement.

On voit que l'invention conserve les mesures prises classiquement pour assurer le montage du volant sur la colonne, ce qui permet au volant selon l'invention de pouvoir être monté sur des colonnes de type conventionnel, mais que grâce aux caractéristiques ajoutées par l'invention, il n'est plus besoin d'avoir accès à la zone du volant que regarde la surface d'appui du moyeu pour pouvoir engager l'organe de vissage avec le moyen de vissage de la colonne et pour serrer cet organe, et qu'en fait il suffit de pouvoir faire tourner l'organe d'entraînement alors qu'il engrène avec la roue, après avoir mis le moyeu en position vis-à-vis de la colonne.

Le fait que la roue soit montée à rotation sur le moyeu, c'est-à-dire que tout mouvement de la roue autre qu'une rotation autour de son axe est interdit, permet de réaliser de façon particulièrement simple, commode et économique, tant le montage de la roue sur le moyeu, que la coopération entre la roue et l'organe rotatif d'entraînement.

En outre, du fait que les moyens d'engrènement de la roue sont situés en périphérie, c'est-à-dire relativement à l'écart de l'axe du moyeu (la roue et le moyeu sont coaxiaux) permet de se présenter en un endroit du volant relativement facile d'accès pour faire tourner l'organe d'entraînement rotatif.

Dans un premier mode de réalisation préféré, lesdits moyens moyens d'engrènement dont est munie en périphérie ladite roue, sont adaptés à coopérer avec un organe rotatif d'entraînement orienté suivant une direction transversale à ladite direction axiale.

On utilise avantageusement ce mode de réalisation dans des cas où il est particulièrement aisé de se présenter latéralement vis-à-vis du volant pour faire tourner l'organe d'entraînement rotatif.

Dans un autre mode de réalisation préféré, lesdits moyens d'engrènement dont est munie en périphérie ladite roue, sont adaptés à coopérer avec un organe rotatif d'entraînement orienté parallèlement à ladite direction axiale.

On utilise avantageusement ce mode de réalisation dans les cas où il est particulièrement aisé de se présenter vis-à-vis du volant par l'arrière, voire par l'avant, de façon déportée vis-à-vis de l'axe du volant.

Selon des caractéristiques préférées, lesdits moyens d'engrènement dont est munie en périphérie ladite roue, sont formés par une denture d'engrènement conique.

Une telle denture convient particulièrement bien, du fait notamment des rapports de démultiplication qu'elle permet d'obtenir.

Selon d'autres caractéristiques préférées, ledit organe d'entraînement est monté à rotation sur ledit moyeu, et engrène en permanence avec ladite roue.

Il est ainsi particulièrement commode de mettre en rotation l'organe d'entraînement, puisqu'il est déjà en place, et qu'on n'a plus qu'à le faire tourner.

Selon des caractéristiques alternatives préférées, dans le cas où l'on souhaite effectuer autant que possible des économies de matière et de montage dans le volant, ledit moyeu comporte un support adapté à recevoir ledit organe rotatif d'entraînement, pour le maintenir dans une position où il engrène avec ladite roue, ledit organe rotatif d'entraînement étant formé par un outil qu'on fait pénétrer temporairement dans ledit volant.

De préférence, pour des raisons de simplicité, de commodité et de facilité tant à la fabrication qu'à l'utilisation, ledit support comporte un creux adapté à recevoir un dit outil comportant un pignon à denture conique, et une tige de centrage située en avant dudit pignon.

En particulier, ledit creux est ouvert vers la face intérieure de ladite roue.

Selon d'autres caractéristiques préférées, pour des raisons de simplicité, de commodité et d'économie, ladite roue est montée à rotation sur ledit moyeu grâce à au moins trois plots présentant chacun une surface inférieure et une surface latérale en regard respectivement d'une surface inférieure et d'une surface latérale de ladite roue, et recevant chacun une vis dont une surface inférieure de la tête est en regard d'une surface supérieure de la roue.

Dans un mode de réalisation préféré, ledit organe de vissage est retenu en place par ladite roue de sorte qu'il est monté à coulissement visà-vis de ladite roue, coaxialement à celle-ci, avec une course de longueur prédéterminée.

Du fait que le seul mouvement qu'il soit possible à l'organe de vissage d'effectuer vis-à-vis de la roue est un coulissement coaxialement à celle-ci, cet organe de vissage, quelle que soit sa position vis-à-vis de la roue, reste orienté convenablement pour pouvoir coopérer avec le moyen de vissage de la colonne.

Cette possibilité qu'a l'organe de vissage de se déplacer vis-à-vis de la roue, permet d'engager plus ou moins, suivant la longueur de la course possible, l'alésage du moyeu sur le bout de la colonne avant d'engager l'organe de vissage du volant sur le moyen de vissage de la colonne, c'est-à-dire permet d'effectuer un pré-positionnement qui facilite grandement le montage.

Selon des caractéristiques préférées de ce mode de réalisation, ladite longueur prédéterminée de la course de coulissement de l'organe de vissage est telle que l'organe de vissage s'engage avec le moyen de vissage de la colonne sur laquelle il est prévu de monter ledit volant, au plus loin quand la surface de butée du moyeu vient porter sur la surface d'arrêt de cette colonne.

Lors du montage, cela permet, au plus loin en fin de course, d'avoir l'organe de vissage en place par rapport au moyen de vissage pour qu'il s'y mette en prise lorsqu'il va tourner.

En outre, si la course est plus petite que le maximum indiqué ci-dessus, lors du démontage, l'organe de vissage va arriver en bout de course de son mouvement vis-à-vis de la roue alors que cet organe est encore engagé sur le moyen de vissage de la colonne, et par conséquent la poursuite de la rotation de l'organe dans le sens du dévissage va provoquer un effet d'arrache-moyeu, c'est-à-dire que le moyeu va se libérer du bout de la colonne en coulissant vis-à-vis de celle-ci dans le sens du retrait.

Selon d'autres caractéristiques préférées de ce mode de réalisation, pour des raisons de simplicité, de commodité et d'économie tant à la fabrication qu'au montage, ledit organe de vissage comporte un élément à section polygonale dont chaque face transversale d'extrémité est plate, ladite roue comporte un logement en forme de cuvette inversée de même section que ledit élément et de hauteur supérieure à l'épaisseur dudit élément, et ce dernier est engagé dans ledit logement avec une face d'extrémité en regard de la surface de toit du logement et avec l'autre face d'extrémité en regard de la surface d'appui du moyeu.

Dans un autre mode de réalisation, ledit organe de vissage est retenu en place par ladite roue de sorte qu'il n'a aucune liberté vis-à-vis de celle-ci.

L'organe est ainsi, de même que la roue, monté à rotation vis-à-vis du moyeu.

Ce mode de réalisation permet d'avoir une roue ne présentant qu'un très faible encombrement en épaisseur, et ayant une forme particulièrement simple.

Du fait qu'en même temps qu'on visse ou dévisse l'organe, le moyeu (et donc le volant) coulisse vis-à-vis de la colonne, respectivement dans le sens de l'enfoncement et dans le sens du retrait, on dispose, lors du démontage, de l'effet d'arrache-moyeu susmentionné aussitôt que l'organe de vissage tourne dans le sens du dévissage.

Dans une première forme pratique de mise en oeuvre de ce mode de réalisation, ledit organe de vissage comporte un élément à section polygonale dont chaque face transversale d'extrémité est plate, ladite roue comporte un logement en forme de cuvette inversée de même section que ledit élément et de même hauteur que l'épaisseur de celui-ci, et ledit élément est engagé dans ledit logement avec une face d'extrémité qui porte contre la surface d'appui du moyeu et l'autre face d'extrémité qui porte contre la surface de toit dudit logement.

On peut ainsi utiliser un organe de vissage à portion polygonale classique, par exemple un écrou hexagonal ou une vis à tête hexagonale.

Dans une autre forme pratique de mise en oeuvre de ce mode de réalisation, ledit organe de vissage comporte un élément à section polygonale et une collerette plate orientée transversalement et s'étendant radialement au-delà dudit élément, en ce que ladite roue comporte une ouverture centrale de même section que ledit élément, et en ce que ce dernier est engagé dans l'ouverture centrale de la roue tandis que la collerette est prise entre la surface d'appui du moyeu et la surface bordant l'ouverture centrale de la roue.

On peut ainsi utiliser une roue qui est complètement plate, et donc particulièrement facile à fabriquer.

Selon des caractéristiques préférées de ce mode de réalisation, ledit organe de vissage est une vis, et sa tige comporte une portion lisse s'étendant sur une longueur prédéterminée entre son extrémité libre et une portion filetée, ladite portion lisse ayant un diamètre correspondant au diamètre à fond de filet de la portion filetée.

La portion libre de la tige peut ainsi s'engager librement dans le taraudage qui forme le moyen de vissage de la colonne, ce qui procure un positionnement initial qui facilite le montage.

L'invention propose également une colonne de direction comportant un bout adapté au montage d'un volant selon ce mode de réalisation, le bout comportant comme moyen de vissage, une tige filetée comportant une portion lisse s'étendant sur une longueur prédéterminée entre son extrémité libre et une portion filetée, ladite portion lisse ayant un diamètre correspondant au diamètre à fond de filet de la portion filetée.

L'écrou formant le moyen de vissage du volant peut ainsi s'engager librement dans la portion lisse de la tige filetée de la colonne, pour procurer comme précédemment un positionnement initial qui facile le montage.

L'exposé de l'invention sera maintenant poursuivi par la description d'un exemple de réalisation, donnée ci-après à titre illustratif et non limitatif, en référence aux dessins annexés.

Sur ceux-ci :
- la figure 1 est une vue partielle en élévation-coupe prise au niveau du moyeu d'un volant conforme à l'invention, montré engagé en position initiale sur une colonne de direction ;
- la figure 2 est une vue similaire, le volant étant montré en position de montage terminé sur la colonne ;
- la figure 3 est une vue similaire à la figure 1, pour une première variante où l'écrou formant l'organe de vissage du volant est remplacé par une vis et où la tige filetée formant le moyen de vissage de la colonne est remplacée par un taraudage ;
- les figures 4 à 6 sont respectivement similaires aux figures 1 à 3, pour une deuxième variante (figures 4 et 5) et pour une troisième variante (figure 6) dans lesquelles la roue du volant retient en place l'organe de vissage, de sorte qu'il n'a aucune liberté vis-à-vis de celle-ci ;
- la figure 7 est une vue partielle en perspective avec arrachement, prise au niveau du moyeu d'une quatrième variante du volant selon l'invention, du même genre que le volant de la figure 6, mais avec une roue et une vis différente ;
- la figure 8 est une vue en perspective éclatée prise au niveau du moyeu d'une cinquième variante du volant selon l'invention, similaire à celle de la figure 7, mais avec une roue de type différent et aucun organe d'entraînement de cette roue qui reste en place dans le volant, seul un support de positionnement d'un organe inséré temporairement dans le volant étant prévu ;
- la figure 9 est une vue partielle en élévation-coupe, prise au niveau du moyeu d'une sixième variante du volant selon l'invention, similaire à celui des figures 1 et 2, mais avec une roue dont les moyens d'engrènement sont différents, et un support pour un organe d'entraînement de la roue qui est inséré temporairement dans le volant ; et
- la figure 10 montre de la même façon ce volant fixé sur une colonne de direction, avec l'organe d'entraînement qui est encore en place.

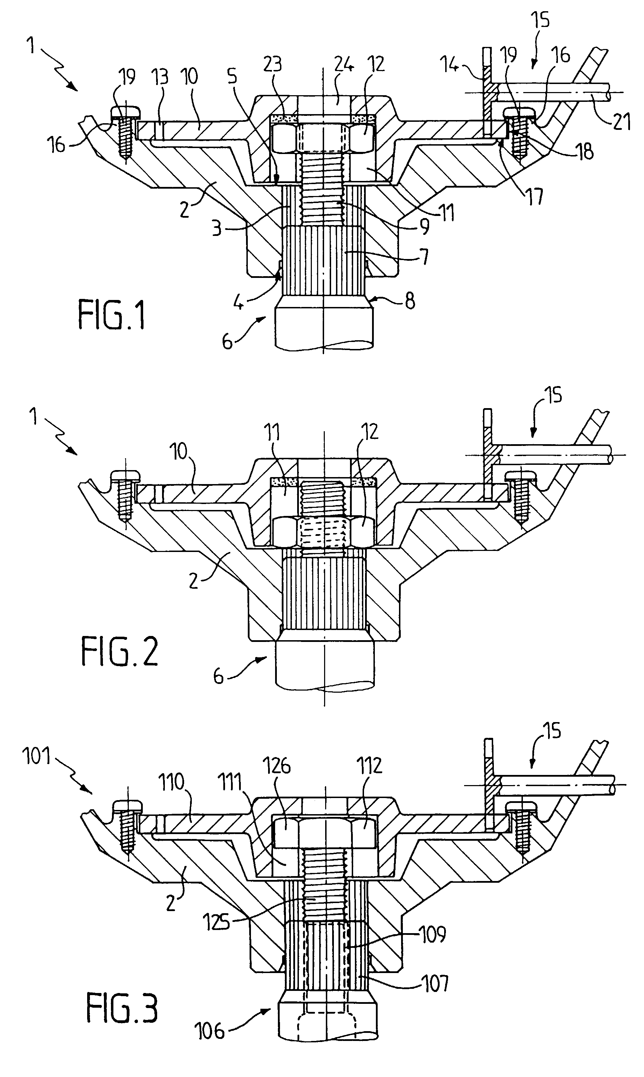

Le volant 1 montré partiellement sur la figure 1 comporte un moyeu 2 présentant un alésage 3, d'un côté duquel se trouve une surface de butée 4, et de l'autre côté duquel se trouve une surface d'appui 5.

Ce volant est prévu pour être monté sur le bout 6 d'une colonne de direction qui présente une portion rainurée ou cannelée 7, d'un côté de laquelle se trouve une surface d'arrêt 8, et de l'autre côté de laquelle se trouve une tige filetée 9.

Une roue 10 est montée à rotation sur le moyeu 2, coaxialement à celui-ci, du côté où regarde la surface d'appui 5, cette roue présentant dans son centre un logement 11 en forme de cuvette inversée dans lequel est retenu un écrou 12, tandis qu'en périphérie elle est munie d'empreintes 13 servant de moyen d'engrènement avec le pignon 14 d'un organe rotatif d'entraînement 15.

L'alésage 3 est adapté à s'engager par coulissement suivant une direction axiale sur le bout 6 de la colonne de direction, et plus précisément sur la portion 7 de cette dernière, l'alésage 3 et la portion 7 présentant des rainures ou cannelures correspondantes, orientées axialement, qui permettent d'éviter que le moyeu et la colonne ne puissent tourner l'un par rapport à l'autre.

La surface de butée 4 du moyeu 2 est adaptée à venir porter sur la surface d'arrêt 8 du bout 6 de la colonne, pour arrêter le mouvement d'enfoncement du moyeu 2 vis-à-vis de la colonne (voir la figure 2 où les surfaces 4 et 8 portent l'une contre l'autre).

La surface d'appui 5 qui se trouve à l'opposé de la surface de butée 4 est adaptée à être mise en prise par l'organe de vissage que constitue l'écrou 12, cet écrou étant prévu pour être engagé sur la tige filetée 9 qui est coaxiale à la portion 7 et à la surface 8, la rotation de l'écrou 12 dans le sens du vissage, lorsqu'il est en prise sur la tige 9, entraînant cet écrou vis-à-vis de la colonne suivant la direction axiale dans le sens de l'enfoncement.

Lorsque l'écrou 9 est serré, comme montré sur la figure 2, le moyeu 2 est enserré entre la surface 8 de la colonne et la surface inférieure de l'écrou 12, qui porte sur la surface d'appui 5.

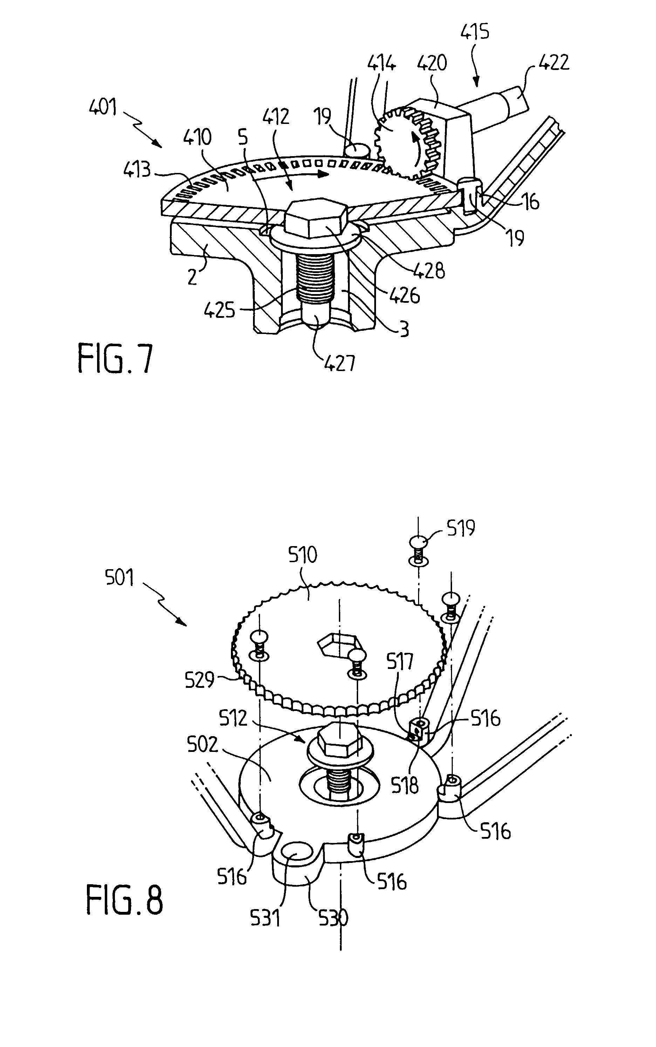

La roue 10 est montée à rotation sur le moyeu 2 grâce à quatre plots 16, similaires à ceux qu'on voit sur la figure 8 pour le moyeu de la cinquième variante du volant, chaque plot 16 présentant une surface inférieure 17 et une surface latérale 18 qui guide respectivement la surface inférieure et la surface latérale de la roue 10 en regard desquelles elle se trouve, chaque plot 16 recevant en outre une vis 19 dont la surface inférieure de la tête guide la surface supérieure de la roue 10 qu'elle regarde.

Les empreintes 13 et l'organe d'entraînement 15 sont du même genre que ceux de la quatrième variante du volant montrée sur la figure 7 : les empreintes 13 sont de simples ouvertures de forme générale parallélépipédique orientées radialement, le pignon 14 a des dents ayant la forme appropriée pour s'engrener dans les empreintes 13, l'organe 15 est d'une façon générale orienté suivant une direction transversale par rapport à la direction axiale de la colonne et du volant, cet organe 15 étant monté à rotation sur le moyeu 2 grâce à un palier non représenté mais similaire au palier 420 montré sur la figure 7, porté par le moyeu 2, et cet organe 15 restant en outre en place en permanence dans le volant 1 avec le pignon 14 engrené dans la roue 10, l'arbre 21 de l'organe 15 ayant à son extrémité opposée au pignon 14, un tronçon de section polygonale, non représenté sur les figures 1 et 2 mais similaire au tronçon à section polygonale 422 montré sur la figure 7, accessible de l'extérieur du volant 1, et prévu pour engager l'organe 15 avec une clé manuelle ou motorisée afin de faire tourner l'organe 15 dans un sens ou dans l'autre.

Le logement 11 est en forme de cuvette inversée. Il a une section similaire à celle de l'écrou 12, c'est-à-dire de forme hexagonale, et une hauteur supérieure à l'épaisseur de l'écrou 12, ce logement 11 étant coaxial au moyeu 2, de sorte que l'écrou 12 est retenu en place par la roue 10 et qu'il est monté à coulissement vis-à-vis de cette roue, coaxialement à celle-ci, avec une course ayant une certaine longueur.

Dans le volant 1, cette longueur est telle que lorsqu'on vient engager le moyeu 2 sur le bout 6 de la colonne, l'écrou 12 s'engage avec la tige filetée 9 avant que la surface d'appui 4 ne vienne porter contre la surface d'arrêt 8 (position de la figure 1).

Une rondelle élastique 23, par exemple en mousse de matière plastique, est disposée contre la surface de toit du logement 11, et permet, dans la position de la figure 1, d'orienter convenablement l'écrou 12 pour qu'il se mette en prise avec la tige filetée 9 aussitôt qu'il commence à tourner dans le sens du vissage.

Bien évidemment, la force qui permet à l'écrou 12 de tourner dans un sens ou dans l'autre, est transmise depuis l'extérieur du volant à l'organe 15, qui la transmet par l'intermédiaire du pignon 14 et des empreintes 13 à la roue 10, qui communique à son tour le mouvement à l'écrou 12 grâce à la forme prismatique du logement 11.

Pour monter le volant 1 sur le bout 6 de la colonne de direction, l'opérateur engage l'alésage 3 sur le tronçon 7 et enfonce le moyeu vis-à-vis de la colonne jusqu'à ce qu'il ne puisse plus avancer, l'extrémité de la colonne, c'est-à-dire le bout de la tige filetée 9 étant venu en contact avec l'écrou 12 qui est venu en bout de course, c'est-à-dire qu'il a été arrêté par la surface de toit du logement 11, par l'intermédiaire de la rondelle 23.

L'opérateur se sert alors de la clé manuelle ou motorisée qu'il a engagée sur l'extrémité accessible de l'organe 15, pour mettre celui-ci en rotation dans le sens voulu pour que l'écrou 12 se visse sur la tige 9.

Au cours du vissage, le moyeu 2 continue à s'enfoncer vis-à-vis de la colonne jusqu'à ce que la surface de butée 4 vienne porter contre la surface d'arrêt 8, le vissage se poursuivant jusqu'à ce que l'écrou 12 soit serré, c'est-à-dire qu'il soit dans la position de la figure 2.

Pour démonter le volant, on effectue l'opération inverse c'est-à-dire qu'on fait tourner l'organe 15 en sens inverse, l'écrou 12 coulissant dans le logement 11 jusqu'à ce qu'il soit arrêté par la surface de toit de celui-ci, position à partir de laquelle la rotation de l'écrou 12 dans le sens du dévissage provoque le coulissement du moyeu 2 vis-à-vis du bout 6 de la colonne de direction dans le sens du retrait (fonction arrache-moyeu). Lorsque le dévissage est complètement terminé, le volant 1 se trouve, vis-à-vis du bout 6 de la colonne, dans la position montrée sur la figure 1.

Le trou 24 pratiqué dans la paroi qui délimite la surface de toit du logement 11, et celui présent au centre de la rondelle 23, permettent d'éviter que des phénomènes de pression ne gênent le coulissement de l'écrou 12 à l'intérieur du logement 11.

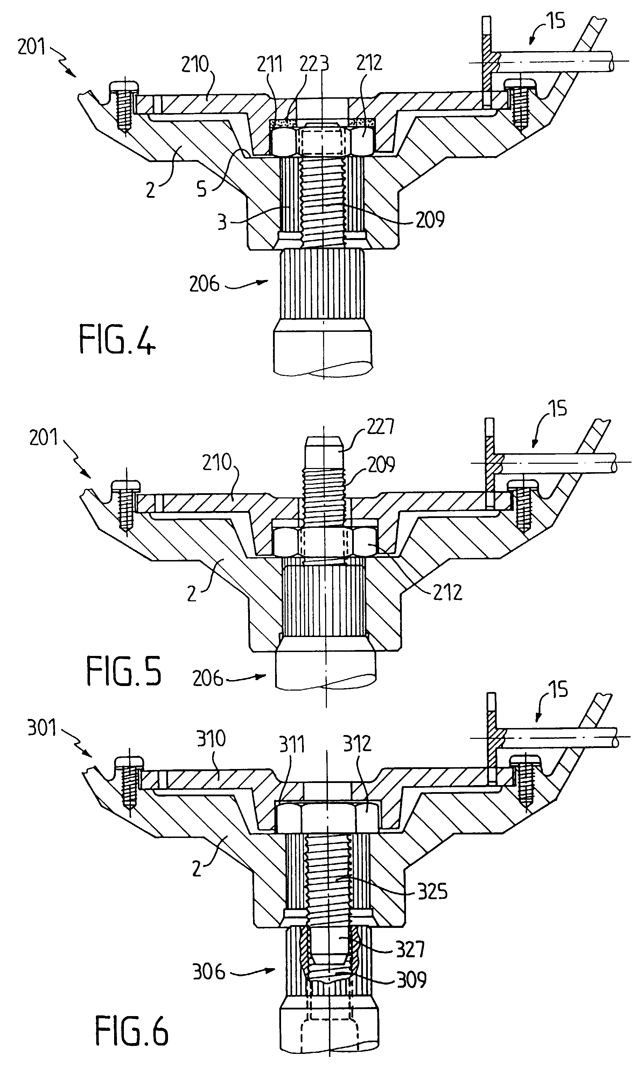

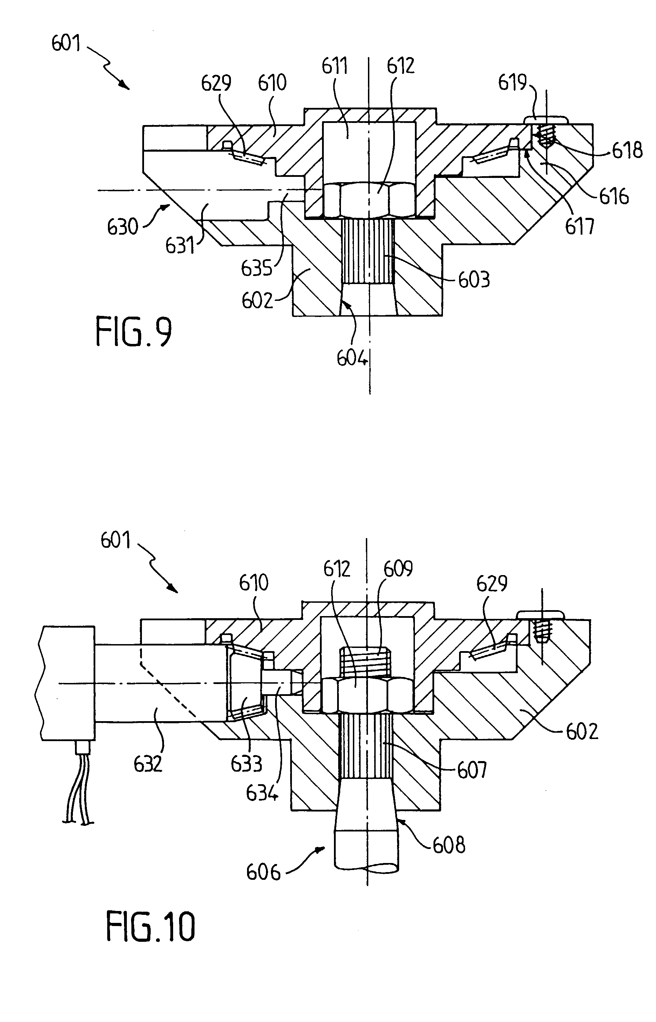

Pour les variantes 101, 201, 301, 401, 501 et 601 du volant 1 montrées respectivement sur la figure 3, sur les figures 4 et 5, sur la figure 6, sur la figure 7, sur la figure 8 et sur les figures 9 et 10, on a utilisé la même référence numérique que pour le volant 1 pour des éléments identiques, tandis que pour les éléments similaires on a respectivement rajouté le chiffre 100, 200, 300, 400, 500 et 600.

Le volant 101 montré sur la figure 3 se différencie du volant 1 par le fait que l'écrou 12 a été remplacé par une vis 112, le bout 106 de la colonne de direction étant identique au bout 6, à cette différence près que la tige 9 a été remplacée par un taraudage 109 qui débouche au niveau de l'extrémité libre de la portion cannelée 107, et qui est adapté à coopérer avec la tige 125 de la vis 112.

La tête 126 de cette vis a une section et une épaisseur qui sont la même que celle de l'écrou 12, mais le logement 111 est légèrement moins haut que le logement 11, la différence correspondant à l'épaisseur de la rondelle 23, qui n'est pas prévue ici, de sorte que la course de la tête 126 est exactement la même que celle de l'écrou 12, le montage du volant 101 sur la colonne 106 s'effectuant ainsi d'une manière tout à fait similaire à celle du volant 1 sur la colonne 6. La tête 126 de la vis 112, tout comme l'écrou 12, a en outre chaque face transversale d'extrémité qui est plate, l'une d'elle étant en regard de la surface d'appui du moyeu 2 et l'autre en regard de la surface de toit du logement 111.

La course de l'organe de vissage que constitue l'écrou 12 ou la vis 112 peut être choisie plus ou moins longue en fonction des circonstances, sa longueur étant de préférence telle que l'organe de vissage s'engage avec le moyen de vissage de la colonne au plus loin quand la surface de butée du moyeu vient porter sur la surface d'arrêt de la colonne.

Dans le volant 201, la hauteur du logement 211, compte tenu de l'espace occupé par la rondelle 223, correspond exactement à la hauteur de l'écrou 212, de sorte que celui-ci n'a aucun degré de liberté vis-à-vis de la roue 210, celle-ci procurant à l'écrou 212 un montage à rotation vis-à-vis du moyeu 2 coaxialement à celui-ci, avec la face transversale inférieure de l'écrou 212 qui porte sur la surface d'appui 5 du moyeu 2.

Ainsi, lorsque l'écrou 212 est engagé sur la tige filetée 209 du bout 206 de la colonne de direction, le fait de faire tourner l'écrou 212 fait coulisser le moyeu 2 vis-à-vis de la colonne, dans le sens de l'enfoncement ou de l'extraction, respectivement quand l'écrou 12 est vissé ou dévissé.

Comme on le voit mieux sur la figure 5, la tige 209 comporte une portion lisse 227 s'étendant sur une certaine longueur entre son extrémité libre et sa portion filetée, la portion libre ayant un diamètre correspondant au diamètre à fond de filet de la portion filetée.

Pour monter le volant 201 sur le bout 206 de la colonne de direction, l'opérateur engage l'alésage 3 sur la tige filetée 209, jusqu'à ce que la portion lisse 227 de cette tige se trouve dans le taraudage de l'écrou 212 (position de la figure 4).

L'opérateur fait ensuite tourner l'organe d'entraînement 15 dans le sens permettant à l'écrou 212 de se visser, le volant coulissant alors le long de la colonne dans le sens de l'enfoncement jusqu'à la position montrée sur la figure 5 où l'écrou 212 est serré.

Le volant 301 et le bout 306 de colonne de direction montrés sur la figure 6 présentent exactement les mêmes différences respectivement vis-à-vis du volant 201 et du bout 206 de colonne de direction, que le volant 101 vis-à-vis du volant 1 et que la colonne 106 vis-à-vis de la colonne 6, la vis 312 ayant une tige 325 comportant une portion lisse 327 s'étendant sur une certaine longueur entre son extrémité libre et la portion filetée, la portion lisse 327 ayant un diamètre correspondant au diamètre à fond de filet de la portion filetée de la tige 325, un positionnement initial similaire à celui procuré par l'insertion de la portion 227 dans le taraudage de l'écrou 212, étant procuré par l'insertion de la portion 327 dans le taraudage 309 du bout 306 de la colonne de direction.

Le volant 401 montré sur la figure 7 est monté et démonté d'une façon similaire au volant 201 ou au volant 301, son organe de vissage 412 (une vis) étant lui aussi retenu en place par la roue 410 de sorte qu'il n'a aucune liberté vis-à-vis de celle-ci, la tige filetée 425 de la vis 412 comportant un tronçon 427 similaire à et remplissant la même fonction que le tronçon 327 de la tige 325.

Contrairement aux roues 10, 110, 210 et 310, la roue 410 du volant 401 est entièrement plate et comporte une ouverture centrale de même section que la tête 426 de la vis 412, cette tête étant engagée dans cette ouverture, la vis 412 comportant en outre une collerette 428 plate, orientée transversalement et s'étendant radialement au-delà de la tête 426, la collerette 428 étant prise entre la surface d'appui 5 du moyeu 2 et la surface bordant l'ouverture centrale de la roue 410 dans laquelle est engagée la tête 426.

Dans le volant 501 montré sur la figure 8, il est prévu un organe de vissage 512 identique à la vis 412, et monté sur le volant de la même façon. La roue 510 est totalement plate, mais au lieu d'avoir des empreintes 13 ou 413 pour coopérer avec un organe rotatif d'entraînement orienté suivant une direction transversale, les moyens d'engrènement sont des dents 529 pratiquées sur la tranche de la roue 510, ces dents étant prévues pour coopérer avec un organe d'entraînement rotatif qu'on fait pénétrer temporairement dans le volant, le moyeu 502 comportant un support 530 présentant un creux 531 pour recevoir cet outil et pour le maintenir dans une position où il engrène avec les dents 529 de la roue 510.

Le volant 601 montré sur les figures 9 et 10 est d'une façon générale similaire au volant 1, la roue 610 ayant toutefois des moyens d'engrènement formés par une denture d'engrènement conique, c'est-à-dire comportant des dents 629 du type de celles d'un engrenage conique, ces dents étant disposées sur la face inférieure de la roue 610, c'est-à-dire du côté qui regarde le moyeu.

En outre, au lieu d'avoir un organe rotatif d'entraînement de la roue qui y reste monté en permanence, le volant 601 est prévu pour recevoir de façon temporaire un organe 632 (voir figure 10) dans une position où son pignon 633 à denture conique vient s'engrener avec les dents 629 de la roue 610, l'outil 632 comportant une tige de centrage 634 en avant du pignon 633, un espace 635 de réception de la tige 634 étant prévu dans le creux 631, celuici s'ouvrant vers la face inférieure de la roue 610 afin de permettre l'engrènement des dents du pignon 633 avec les dents 629 de la roue 610.

On observera que le fait de prévoir que l'organe 632 vienne se mettre en place sous la roue 610, avec le creux 631 qui est ménagé dans l'épaisseur du moyeu 602, est particulièrement avantageux sur le plan de l'encombrement.

Dans une variante non illustrée, la roue 610 est remplacée par une roue où la denture conique est située sur le dessus, et le moyeu 602 par un moyeu comportant un support correspondant pour l'outil 632.

On observera que dans cette dernière variante, il faut faire tourner l'outil 632 dans le sens des aiguilles d'une montre pour faire tourner l'organe de vissage dans le sens des aiguilles d'une montre, c'est-à-dire dans le sens du vissage, alors que dans le volant 601, c'est dans le sens inverse des aiguilles d'une montre qu'il faut faire tourner l'outil 632 pour faire tourner l'écrou 612 dans le sens du vissage.

Cette dernière variante peut donc être préférable si l'on souhaite faire tourner l'outil 632 dans le sens habituel du vissage pour montrer le volant sur la colonne.

Dans d'autres variantes non illustrées, la roue des volants 1, 101, 201, 301, 401 ou 501 est modifiée pour que ses moyens d'engrènement soient formés, comme la roue 610, par une denture d'engrènement conique, mais située sur le dessus de la roue qui remplace respectivement la roue 10, 110, 210 ou 410 puisque dans les volants correspondants l'organe d'entraînement est en regard du dessus de la roue, alors que, pour la roue qui remplace la roue 510, la denture d'engrènement conique est prévue sur la tranche, étant donné que l'organe d'entraînement y est orienté parallèlement à l'axe du volant; ou alors on prévoit que la denture de la roue qui remplace respectivement la roue 10, 110, 210, 310 ou 410 est située sur le dessus, et qu'un support soit prévu dans le moyeu 2 pour un organe tel que l'outil 632.

Dans d'autres variantes non illustrées, on prévoit dans le volant un organe d'entraînement rotatif fixé à demeure comme l'organe 15 ou 415, mais orienté parallèlement à l'axe du volant; on prévoit une collerette telle que la collerette 428 pour monter un écrou d'une façon similaire à la vis 412 ou à la vis 512; on utilise seulement trois plots tels que 16 ou 516 pour le montage de la roue, ou alors davantage que quatre plots; on prévoit une rondelle élastique telle que la rondelle 23 ou la rondelle 223 dans les cas où l'organe de vissage du volant est une vis et/ou on remplace cette rondelle par un autre type de moyen élastique; ou on prévoit une autre section polygonale qu'un hexagone pour l'engagement entre l'organe de vissage et la roue.

Plus généralement, on rappelle que l'invention ne se limite pas aux exemples décrits et représentés.

## Revendications

1. Volant de direction pour véhicule, comportant un moyeu présentant :
- un alésage adapté à s'engager par coulissement suivant une direction axiale sur le bout d'une colonne de direction que comporte le véhicule;
- une surface de butée adaptée à venir porter sur une surface d'arrêt correspondante de ladite colonne pour arrêter le mouvement d'enfoncement du moyeu vis-à-vis de la colonne suivant ladite direction axiale ; et
- une surface d'appui opposée à ladite surface de butée, adaptée à être mise en prise par un organe de vissage prévu pour être engagé sur un moyen de vissage que comporte ladite colonne, avec la rotation dudit organe dans le sens du vissage qui entraîne cet organe vis-à-vis de la colonne suivant ladite direction axiale dans le sens de l'enfoncement, et avec le serrage dudit organe de vissage qui enserre le moyeu entre la surface d'arrêt de la colonne, sur laquelle porte la surface de butée du moyeu, et l'organe de serrage, qui porte sur la surface d'appui du moyeu ;
volant caractérisé en ce qu'il comporte une roue (10; 210; 310; 410; 510 ; 610) pour retenir en place ledit organe de vissage (12; 112; 212; 312; 412 ; 512; 612) et pour l'entraîner en rotation vis-à-vis du moyeu (2; 502; 602), ladite roue étant montée à rotation sur le moyeu coaxialement à celui-ci, et étant munie en périphérie de moyens d'engrènement (13; 413; 529 ; 629) avec un organe rotatif d'entraînement (15; 415; 632).

2. Volant selon la revendication 1, caractérisé en ce que lesdits moyens d'engrènement (13; 413; 629) dont est munie en périphérie ladite roue (10; 110; 210 ; 310; 410; 610), sont adaptés à coopérer avec un organe rotatif d'entraînement (15; 415; 632) orienté suivant une direction transversale à ladite direction axiale.

3. Volant selon la revendication 1, caractérisé en ce que lesdits moyens d'engrènement (529) dont est munie en périphérie ladite roue (510), sont adaptés à coopérer avec un organe rotatif d'entraînement orienté parallèlement à ladite direction axiale.

4. Volant selon l'une quelconque des revendications 1 à 3, caractérisé en ce que lesdits moyens d'engrènement dont est munie en périphérie ladite roue (610), sont formés par une denture (629) d'engrènement conique.

5. Volant selon l'une quelconque des revendications 1 à 4, caractérisé en ce que ledit organe rotatif d'entraînement (15; 415) est monté à rotation sur ledit moyeu (2), et engrène en permanence avec ladite roue (10 ; 110 ; 210 ; 310 ; 410).

6. Volant selon l'une quelconque des revendications 1 à 4, caractérisé en ce que ledit moyeu (502; 602) comporte un support (530; 630) adapté à recevoir ledit organe rotatif d'entraînement, pour le maintenir dans une position où il engrène avec ladite roue (510; 610), ledit organe rotatif d'entraînement étant formé par un outil qu'on fait pénétrer temporairement dans ledit volant(501; 601).

7. Volant selon la revendication 6, caractérisé en ce que ledit support (630) comporte un creux (631) adapté à recevoir un dit outil (632) comportant un pignon (633) à denture conique, et une tige (634) de centrage située en avant dudit pignon.

8. Volant selon la revendication 7, caractérisé en ce que ledit creux (631) est ouvert vers la face inférieure de ladite roue (610).

9. Volant selon l'une quelconque des revendications 1 à 5, caractérisé en ce que ladite roue (10; 110; 210; 310 ; 410; 510; 610) est montée à rotation sur ledit moyeu (2 ; 502; 602) grâce à au moins trois plots (16; 516; 616) présentant chacun une surface inférieure (17; 517 ; 617) et une surface latérale (18; 518; 618) en regard respectivement d'une surface inférieure et d'une surface latérale de ladite roue, et recevant chacun une vis (19; 519; 619) dont une surface inférieure de la tête est en regard d'une surface supérieure de la roue.

10. Volant selon l'une quelconque des revendications 1 à 9, caractérisé en ce que ledit organe de vissage (12; 11 2 ; 612) est retenu en place par ladite roue (10 ; 110 ; 610) de sorte qu'il est monté à coulissement vis-à-vis de ladite roue, coaxialement à celle-ci, avec une course de longueur prédéterminée.

11. Volant selon la revendication 10, caractérisé en ce que ladite longueur prédéterminée de la course de coulissement de l'organe de vissage (12; 112 ; 612) est telle que l'organe de vissage s'engage avec le moyen de vissage (9; 109; 609) de la colonne sur laquelle il est prévu de monter ledit volant, au plus loin quand la surface de butée (4; 604) du moyeu (2) vient porter sur la surface d'arrêt (8; 608) de cette colonne.

12. Volant selon l'une quelconque des revendications 10 ou 11, caractérisé en ce que ledit organe de vissage (12; 112; 612) comporte un élément (12 ; 126; 612) à section polygonale dont chaque face transversale d'extrémité est plate, en ce que ladite roue (10; 110; 610) comporte un logement en forme de cuvette inversée de même section que ledit élément et de hauteur supérieure à l'épaisseur dudit élément, et en ce que ce dernier est engagé dans ledit logement avec une face d'extrémité en regard de la surface de toit du logement et avec l'autre face d'extrémité en regard de la surface d'appui (5) du moyeu.

13. Volant selon l'une quelconque des revendications 1 à 9, caractérisé en ce que ledit organe de vissage (212; 312; 412 ; 512) est retenu en place par ladite roue (210; 310; 410; 510) de sorte qu'il n'a aucune liberté vis-à-vis de celle-ci.

14. Volant selon la revendication 13, caractérisé en ce que ledit organe de vissage (212; 312) comporte un élément à section polygonale dont chaque face transversale d'extrémité est plate, en ce que ladite roue (210 ; 310) comporte un logement (211; 311) en forme de cuvette inversée de même section que ledit élément et de même hauteur que l'épaisseur de celui-ci, et en ce que ledit élément est engagé dans ledit logement avec une face d'extrémité qui porte contre la surface d'appui (5) du moyeu et l'autre face d'extrémité qui porte contre la surface de toit dudit logement.

15. Volant selon l'une quelconque des revendications 12 ou 14, caractérisé en ce qu'il comporte un moyen élastique (23; 223) disposé entre ledit organe de vissage (12; 212) et ladite paroi de toit dudit logement (11 ; 211).

16. Volant selon la revendication 13, caractérisé en ce que ledit organe de vissage (412 ; 512) comporte un élément (426) à section polygonale et une collerette plate (428) orientée transversalement et s'étendant radialement au-delà dudit élément, en ce que ladite roue (410; 510) comporte une ouverture centrale de même section que ledit élément, et en ce que ce dernier est engagé dans l'ouverture centrale de la roue (410 ; 510) tandis que la collerette (428) est prise entre la surface d'appui (5) du moyeu et la surface bordant l'ouverture centrale de la roue (410; 510).

17. Volant selon l'une quelconque des revendications 13, 14 ou 16, caractérisé en ce que ledit organe de vissage (312; 412; 512) est une vis, et en ce que sa tige (325; 425) comporte une portion lisse (327; 427) s'étendant sur une longueur prédéterminée entre son extrémité libre et une portion filetée, ladite portion lisse ayant un diamètre correspondant au diamètre à fond de filet de la portion filetée.

18. Colonne de direction, caractérisée en ce qu'elle comporte un bout (206) adaptée au montage d'un volant (201) selon l'une quelconque des revendications 13, 14 ou 16 en ce que ce bout comporte comme dit moyen de vissage (209), une tige filetée comportant une portion lisse (227) s'étendant sur une longueur prédéterminée entre son extrémité libre et une portion filetée, ladite portion lisse ayant un diamètre correspondant au diamètre à fond de filet de la portion filetée.
